# EUROPEAN PATENT APPLICATION

(11) **EP 3 169 094 A1**
(43) Date of publication of application: **17.05.2017**
(21) Application number: 15819702.0
(22) Date of filing: 13.07.2015
(51) Int. Cl.: H04W 8/14, H04W 8/00, H04W 48/12

(54) **DEVICE TO DEVICE COMMUNICATION METHOD, SYSTEM AND STORAGE MEDIUM BASED ON NETWORK SHARING**

(30) Priority: 11.07.2014 CN 201410330708
(71) Applicant: ZTE Corporation, Shenzhen, Guangdong 518057 (CN)
(72) Inventor: MA, Shuyu, Shenzhen Guangdong 518057 (CN); GAO, Yin, Shenzhen Guangdong 518057 (CN); CHEN, Lin, Shenzhen Guangdong 518057 (CN); HUANG, Ying, Shenzhen Guangdong 518057 (CN); XIE, feng, Shenzhen Guangdong 518057 (CN); LUO, Yumin, Shenzhen Guangdong 518057 (CN)
(74) Representative: Savi, Massimiliano
(86) International application number: PCT/CN2015/083911
(87) International publication number: WO 2016/004903

(57) **Abstract**

The embodiments of the present invention disclose a Device to Device communication method and system based on network sharing, and a storage medium. The method includes that: Device to Device User Equipment D2D UE receives at least one of the following information sent by a network through a broadcast message or a dedicated message: a list of different Public Land Mobile Networks PLMNs supporting D2D, resource pool information for D2D discovery and/or D2D communication of different PLMNs, and a PLMN list corresponding to the resource pool information for D2D discovery and/or D2D communication; and a resource range used for D2D discovery and/or D2D communication is determined by virtue of the resource pool information or the resource pool information corresponding to the PLMN list.

## Description

### Technical Field

The present invention relates to a Device to Device D2D communication technology, and more particularly to a Device to Device communication method and system based on network sharing, and a storage medium.

### Background

With development of wireless multimedia services, requirements of people on high data rate and user experiences increasingly grow, so that higher requirements on system capacity and coverage of a conventional cellular network are proposed. On the other hand, requirements of people on proximity service, by which people know about and communicate with interested persons or things nearby, gradually increase along with prevailing of applications such as a social network, short-distance data sharing and local advertising and so on. A conventional cellular network centering a base station has obvious limitations in terms of support to high data rate and proximity service. Under the requirement background, a Device to Device D2D technology representative of a new future development direction of communication technologies emerges. Application of a D2D technology can reduce a burden of a cellular network, reduce battery power consumption of User Equipment UE, increase data transmission rate, and improve robustness of network infrastructure, and well meet the abovementioned requirements on a high-data rate service and proximity service.

Since a D2D technology is yet in a research and development phase, no mature conventional art can be provided for reference.

### Summary of the Invention

In order to solve the abovementioned technical problem, embodiments of the present invention provides a Device to Device communication method and system based on network sharing, and a storage medium.

The technical solutions of embodiments of the present invention are implemented as follows.

A Device to Device communication method based on network sharing is provided, which includes that the following steps.

Device to Device User Equipment D2D UE receives at least one of the following information sent by a network through a broadcast message or a dedicated message:
a list of different Public Land Mobile Networks, PLMNs, supporting D2D,
resource pool information for D2D discovery and/or D2D communication of different PLMNs, and
a list of PLMNs corresponding to the resource pool information for D2D discovery and/or D2D communication.

Resource for D2D discovery and/or D2D communication is determined by virtue of the resource pool information or resource pool information corresponding to the list of PLMNs.

As an implementation mode, the step that the UE determines a resource pool used for D2D discovery and/or D2D communication includes that:
the D2D UE determines available resource for D2D discovery and/or D2D communication required to be monitored and/or received by the D2D UE performing D2D discovery and/or D2D communication according to serving PLMN and equivalent PLMNs obtained by broadcast messages and/or dedicated messages.

As an implementation mode, the method further includes that:
the network allocates corresponding D2D resource pools to the serving PLMN and the equivalent PLMNs respectively.

As an implementation mode, the method further includes that:
the D2D UE acquires radio resource from a D2D discovery resource pool corresponding to serving PLMN of D2D UE when transmitting D2D discovery signaling and/or communication signaling and/or communication data.

As an implementation mode, the broadcast message and/or the dedicated message include/includes at least one of the following information:
a PLMN Identity ID list of D2D operators which support network sharing;
more than one PLMN ID, herein, each PLMN ID corresponds to different resource pools; and
the broadcast message and/or the dedicated message include/includes a list of PLMN IDs using a same resource pool.

As an implementation mode, the broadcast message and/or the dedicated message include/includes time, frequency and code information of a D2D resource pool.

As an implementation mode, the resource pool includes a D2D discovery resource pool/pools and a D2D communication resource pool/pools, herein, the D2D discovery resource pool/pools includes/include a transmission resource pool/pools and a reception resource pool/pools; and
the D2D communication resource pool/pools includes/include a scheduling assignment resource pool/pools, a transmission resource pool/pools and a reception resource pool/pools.

As an implementation mode, the resource pool information for D2D discovery and/or D2D communication of different PLMNs includes neighbor cell/cells D2D discovery resource pool/pools and D2D communication resource pool/pools information.

As an implementation mode, the information of the neighbor cell may include any combination of the following fields: cell Identity information and/or Physical Cell Identity PCI information, cell carrier frequency information, resource pool information for D2D discovery and/or D2D communication, and PLMN or PLMN list information corresponding to resource pools for D2D discovery and/or D2D communication.

As an implementation mode, the method further includes that:
the network obtains resource pool information of the neighbor cell through X2 and/or S 1 interface; or
the network obtains the resource pool information of the neighbor cell through Operation Administration and Maintenance OAM.

As an implementation mode, the method further includes that:
the network bears a D2D PLMN list supported by the network in System Information Block 1 SIB1.

A Device to Device communication system based on network sharing is provided, which includes a D2D UE and a network, herein
the network is arranged to transmit at least one of the following information through a broadcast message or a dedicated message:
a list of different PLMNs supporting D2D,
resource pool information for D2D discovery and/or D2D communication of different PLMNs, and
a list of PLMNs corresponding to the resource pool information for D2D discovery and/or D2D communication; and
the D2D UE is arranged to receive the resource pool information or resource pool information corresponding to the list of PLMNs sent by the network, and determine a resource pool used for D2D discovery and/or D2D communication by virtue of the resource pool information or the resource pool information corresponding to the list of PLMNs.

As an implementation mode, the D2D UE is further arranged to determine available resource for D2D discovery and/or D2D communication required to be monitored and/or received by the D2D UE performing a D2D discovery and/or D2D communication according to broadcast messages and/or dedicated messages of a serving PLMN and equivalent PLMNs.

As an implementation mode, the network is further arranged to allocate corresponding D2D resource pools to the serving PLMN and the equivalent PLMNs respectively.

As an implementation mode, the D2D UE is further arranged to acquire a radio resource from a D2D discovery resource pool corresponding to a serving PLMN of the D2D UE when transmitting D2D discovery signaling and/or communication signaling and/or communication data.

As an implementation mode, the broadcast message and/or the dedicated message include/includes at least one of the following information:
a list of PLMN IDs of D2D operators which support network sharing;
more than one PLMN ID, herein each PLMN ID corresponds to different resource pools; and
the broadcast message and/or the dedicated message include/includes a list of PLMN IDs using a same resource pool,
herein, the broadcast message and/or the dedicated message include/includes time, frequency and code information of a D2D resource pool.

As an implementation mode, the resource pool includes a D2D discovery resource pool/pools and a D2D communication resource pool/pools,
herein, the D2D discovery resource pool/pools includes/includes a transmission resource pool/pools and a reception resource pool/pools; and
the D2D communication resource pool includes a scheduling assignment resource pool/pools, a transmission resource pool/pools and a reception resource pool/pools,
herein, the resource pool information for D2D discovery and/or D2D communication of different PLMNs includes neighbor cell D2D discovery resource pool/pools and D2D communication resource pool/pools information.

As an implementation mode, the network is further arranged to obtain resource pool information of the neighbor cell through X2 and/or S1 interface; or
obtain the resource pool information of the neighbor cell through Operation Administration and Maintenance OAM.

A storage medium is provided, and a computer program is stored in the storage medium, and the computer program is arranged to execute the abovementioned Device to Device communication method based on network sharing.

In embodiments of the present invention, the D2D UE receives the resource pool information, announced by the network through the broadcast message or the dedicated message, for D2D discovery and/or D2D communication under different operators, and selects the corresponding PLMN for D2D discovery and/or D2D communication by virtue of the resource pool information. According to the technical solutions of the embodiments of the present invention, the D2D network operators may cooperate to construct/operate a D2D-technology-based LTE network by network sharing by virtue of respective advantages, so that network construction investments are reduced, and a network deployment speed is greatly increased, and core competitiveness of the operators is improved.

### Description of Drawings

FIG. 1 is a schematic diagram of communication modes of a direct communication device system according to an embodiment of the present invention.
FIG. 2 is a flowchart of a Device to Device communication method based on network sharing according to an embodiment of the present invention.

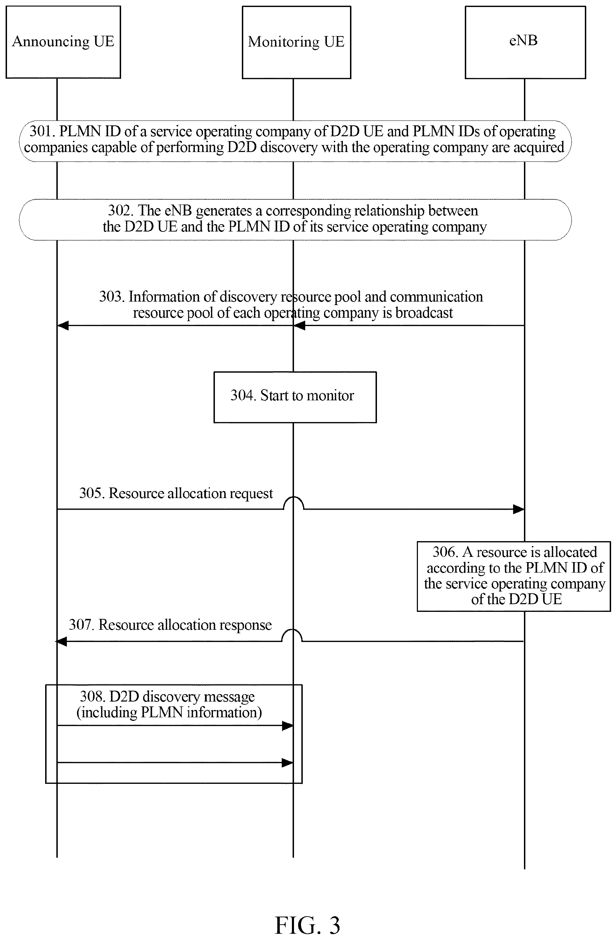

FIG. 3 is a flowchart of example 1 of a Device to Device communication method based on network sharing according to an embodiment of the present invention.
FIG. 4 is a flowchart of example 2 of a Device to Device communication method based on network sharing according to an embodiment of the present invention.
FIG. 5 is a flowchart of example 3 of a Device to Device communication method based on network sharing according to an embodiment of the present invention.
FIG. 6 is a flowchart of example 4 of a Device to Device communication method based on network sharing according to an embodiment of the present invention.
FIG. 7 is a flowchart of example 5 of a Device to Device communication method based on network sharing according to an embodiment of the present invention.
FIG. 8 is a flowchart of example 6 of a Device to Device communication method based on network sharing according to an embodiment of the present invention.

### Specific Embodiments

In order to make a purpose, technical solutions and advantages of the present invention clearer, the present invention will be further described below with reference to embodiments and the drawings in detail.

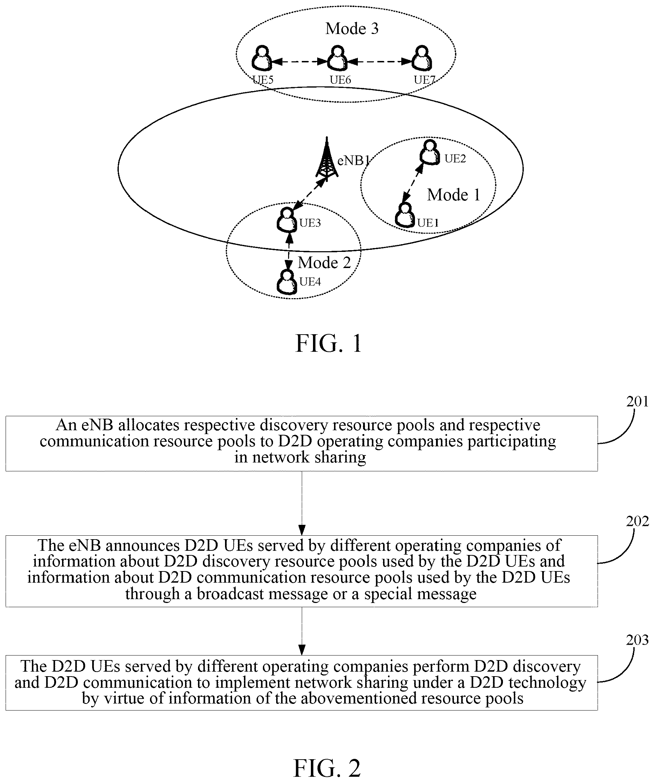

A D2D technology may work in an authorized frequency band or an unauthorized frequency band, and allows multiple UEs supporting a D2D function, i.e. D2D UEs to directly discover/directly communicate with a network infrastructure or without a network infrastructure. There are mainly three D2D application scenarios as follows:
1) UE1 and UE2 perform data interaction under coverage of a cellular network, and user plane data does not pass through a network infrastructure, as shown in mode 1 in FIG. 1.
2) UE in a weakly-covered/uncovered area performs relay transmission, as shown in mode 2 in FIG. 1, and UE4 with poorer signal quality is allowed to communicate with the network through UE3 covered by the network nearby, which can help an operator to extend coverage and improve capacity.
3) Direct communication among equipments is allowed under the condition that the cellular network cannot work normally in case of an earthquake or emergency, as shown in mode 3 in FIG. 1, and a control plane and user plane among UE5, UE6 and UE7 do not pass through any network infrastructure to perform one-hop or multi-hop data communication.

A D2D technology usually includes a D2D discovery technology and a D2D communication technology. The D2D discovery technology refers to a technology configured to judge/determine two or more D2D UEs proximate each other (for example, within a range where a D2D direct communication may be performed) or configured to judge/determine that a first UE is in proximity to a second UE. Usually, D2D UE may discover the other party by transmitting or receiving a discovery signal/information, and under the condition of coverage of a cellular network, the network may assist the D2D UE in D2D discovery. The D2D communication technology refers to a technology that part or all of communication data between D2D UEs can be communicated directly without a network infrastructure.

Network sharing refers to that multiple operators share a universal mobile telecommunications system terrestrial radio access network. A multiple-PLMN scenario is supported in the related art. For example, for a single UE, the UE may reside in multiple networks, and a Public Land Mobile Network PLMN list supported by the UE is called an equivalent PLMN EPLMN list, and these may be appointed by subscription information. A PLMN, which is the same as a PLMN formed by a Mobile Country Code MCC and Mobile Network Code MNC in an International Mobile Subscriber Identity IMSI of the UE, is called a Home PLMN HPLMN of the UE.

FIG. 2 is a flowchart of a Device to Device communication method based on network sharing according to an embodiment of the present invention. As shown in FIG. 2, the Device to Device communication method based on network sharing in the embodiment of the present invention includes the following steps.

In step 201, an eNB acquires information about resource use of D2D operators, and allocates respective discovery resource pools and respective communication resource pools to the D2D operators participating in network sharing.

In step 202, the eNB announces D2D UEs served by different operators of information about D2D discovery resource pools used by the D2D UEs and information D2D communication resource pools used by the D2D UEs through a broadcast (SIB) message or a dedicated message.

The abovementioned broadcast message includes information of multiple operators, and the information of the multiple operators is specifically represented as one or more PLMN IDs.

The abovementioned broadcast message includes time, frequency and code information of the D2D resource pools.

D2D communication and D2D discovery may use different resource pool information.

The eNB allocates different D2D discovery and D2D communication resource pools to different operators.

The resource pool may include a scheduling assignment SA resource pool, a transmission resource pool, a reception resource pool and the like.

The eNB allocates corresponding D2D resources to different PLMNs when allocating a radio resource used when the D2D UE transmits D2D discovery signaling.

The eNB may record a corresponding relationship between the D2D UE and PLMN ID of service operators of D2D UE when the D2D UE performs initial access.

The eNB searches for a discovery resource pool corresponding to a serving PLMN of the D2D UE, and allocates the radio resource to the D2D UE. Or, if the D2D UE has carried or implies its own current serving PLMN when requesting for access, then the eNB is only required to search for the discovery resource pool corresponding to the serving PLMN of the UE and allocate the radio resource to the D2D UE.

If the D2D UE competes to acquire the resource, when the D2D UE transmits D2D discovery signaling and/or communication signaling and/or communication data, the D2D UE allocates the radio resource from the D2D discovery resource pool corresponding to the current serving PLMN or equivalent PLMNs.

In step 203, the D2D UEs served by different operators perform D2D discovery and D2D communication to implement network sharing under a D2D technology by virtue of information of the abovementioned resource pools.

For a D2D discovery scenario, the step 203 may include three sub-steps as follows.

In sub-step 1, the D2D UE acquires its D2D service operator, and, a list of operators capable of performing D2D discovery with the operator.

In sub-step 2, the D2D UE determines a resource range of a D2D discovery signal required to be monitored by the D2D UE in a D2D discovery process according to the broadcast message including the D2D discovery resource pool information and information about the list of the operators capable of performing D2D discovery.

In sub-step 3, the radio resource used when the D2D UE transmits the D2D discovery signaling is allocated according to the service operator.

There are two methods for the sub-step 3 in the scenario, method 1 is that the eNB allocates the radio resource, and method 2 is that the D2D UE allocates the radio resource by itself.

For a D2D communication scenario, the step 203 may also include the following three sub-steps.

In sub-step 1, the D2D UE acquires its D2D service operator, and, a list of operators capable of performing D2D communication with the operator.

In sub-step 2, the D2D UE determines a resource range of a D2D discovery signal required to be received by the D2D UE in a D2D communication process according to a broadcast message including the D2D discovery resource pool information and information about the list of the operators capable of performing D2D communication.

In sub-step 3, the D2D UE allocates the radio resource used when the D2D UE transmits the D2D communication signaling and communication data according to the service operator.

A scenario where the D2D technology is implemented under network sharing further includes a scenario where the eNB broadcasts resource pool information of a neighbor cell.

The essence of the technical solution of the present invention will be further elaborated below with specific examples.

### Embodiment 1

The embodiment provides a specific embodiment of implementing network sharing to implement D2D discovery in a D2D technology. In the embodiment, an eNB allocates a radio resource used when D2D discovery signaling is sent.

The eNB allocates respective discovery resource pools and respective communication resource pools to D2D operators participating in network sharing.

The eNB divides a D2D communication resource pool for each D2D operator in a total resource pool for D2D communication according to PLMN IDs of the D2D operators participating in network sharing.

The eNB divides a D2D discovery resource pool for each D2D operator in a total resource pool for D2D discovery according to the PLMN IDs of the D2D operators participating in network sharing.

The eNB announces D2D UEs served by different operators of information about D2D discovery resource pools used by the D2D UE and information about D2D communication resource pools used by the D2D UE through a broadcast message.

The eNB adds a new SIB message, and a format of the SIB message is shown in Table 1.

| *SystemInformationBlockTypeX* field descriptions |
|---|
| D2D-PerPLMN-List |
| D2D parameter list for each PLMN |
| D2D-PerPLMN |
| D2D-plmn-Identity |
| Identity of D2D plmn |
| parametersD2DfindresourcepoolInformation of D2D discovery resource pool |
| >Frequenceclass |
| Frequency domain information of D2D discovery resource pool |
| >timeslotclass |
| Time information of D2D discovery resource pool |
| >codeclass |
| Code information of D2D discovery resource pool |
| parametersD2Dcommresourcepool |
| Information of D2D communication resource pool |
| >Frequenceclass |
| Frequency domain information of D2D communication resource pool |
| >timeslotclass |
| Time information of D2D communication resource pool |
| >codeclass |
| Code information of D2D communication resource pool |

The SIB message includes the PLMN IDs of the D2D operators in network sharing. Two D2D parameter tables are included for each PLMN ID. Herein, one is a D2D communication resource pool parameter table, and one is a D2D discovery resource pool parameter table. Each parameter table defines the resource range of the resource pool from three aspects of time, frequency and code.

The D2D UEs served by different operators performs D2D discovery to implement network sharing under the D2D technology by virtue of information of the abovementioned resource pools.

In step 301, in a D2D authentication process, the D2D UE acquires PLMN ID of its service operator, and also acquires PLMN ID of D2D operator capable of performing D2D discovery with the operator.

In step 302, in the authentication process, the eNB generates a corresponding relationship between the D2D UE and the PLMN ID of its service operator.

In step 303, the eNB broadcasts discovery resource pool information and communication resource pool information of the sharing operators through an SIB message.

In step 304, the D2D UE receives the broadcast message sent by the eNB, searches for a resource range of a D2D discovery resource pool corresponding to the PLMN ID from the broadcast message according to the PLMN ID of its own service operator at first, and then searches for resource ranges of D2D discovery resource pools corresponding to these PLMN IDs from the broadcast message according to the PLMN IDs of the operators capable of performing D2D discovery with its service operator. The D2D UE monitors discovery signals within these resource ranges.

In step 305, announcing D2D UE in the D2D UEs transmits a resource allocation request message to the eNB before transmitting a D2D discovery message.

In step 306, after receiving the message, the eNB determines the service operator of the D2D UE according to information of the D2D UE, and the eNB allocates a radio resource for the D2D UE in the resource pool corresponding to the service operator of the D2D UE.

In step 307, the eNB transmits a resource allocation response message to the announcing D2D UE in the D2D UEs.

In step 308, the announcing D2D UE in the D2D UEs transmits the D2D discovery message on the resource allocated by the eNB after receiving the message, and monitoring UE in the D2D UEs monitors the message to implement a D2D discovery flow.

In the embodiment of the present invention, it is easy to implement D2D discovery and D2D communication according to the D2D resource, and a detailed flow will not be elaborated since it is not a focus of embodiments of the present invention.

### Embodiment 2

The embodiment provides a specific embodiment of implementing network sharing to implement D2D discovery under a D2D technology. In the embodiment, an eNB allocates a radio resource used when D2D discovery signaling is sent. A difference from embodiment 1 is that announcing UE in D2D UEs carries information of its own service operator when transmitting a resource allocation request in the method.

The eNB allocates respective discovery resource pools and respective communication resource pools to D2D operators participating in network sharing.

The eNB divides a D2D communication resource pool for each D2D operator in a total resource pool for D2D communication according to PLMN IDs of the D2D operators participating in network sharing.

The eNB divides a D2D discovery resource pool for each D2D operator in a total resource pool for D2D discovery according to the PLMN IDs of the D2D operators participating in network sharing.

The eNB announces D2D UEs served by different operators of information of D2D discovery resource pools used by the D2D UE and information of D2D communication resource pools used by the D2D UE through a broadcast message.

The eNB adds a new SIB message, and a format of the SIB message is shown in Table 1. The SIB message includes the PLMN IDs of the D2D operators in network sharing. Two D2D parameter tables are included for each PLMN ID. Herein, one is a D2D communication resource pool parameter table, and one is a D2D discovery resource pool parameter table. Each parameter table defines a resource range of the resource pool from three aspects of time, frequency and code.

The D2D UEs served by different operators perform D2D discovery to implement network sharing under the D2D technology by virtue of information of the abovementioned resource pools.

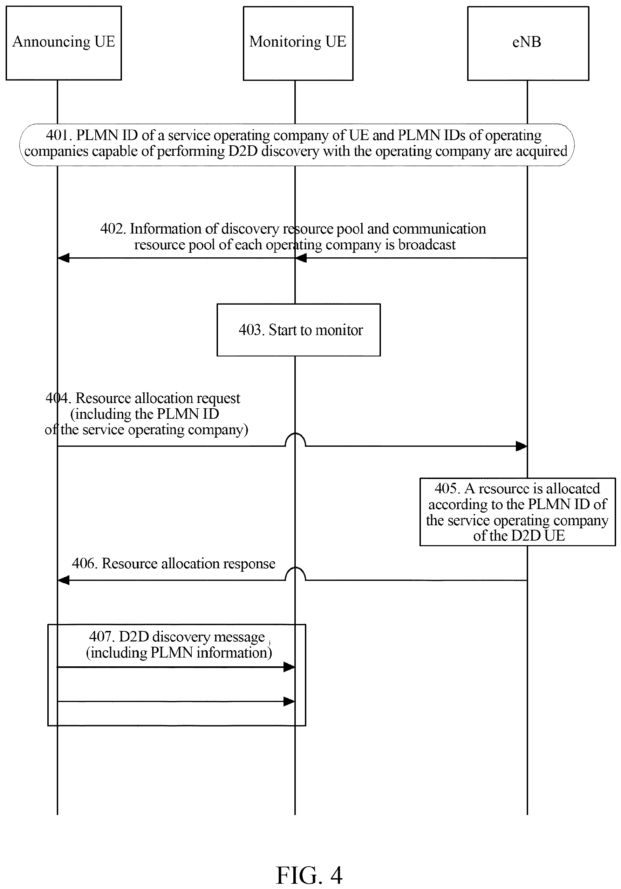

FIG. 4 is a flowchart of example 2 of a Device to Device communication method based on network sharing according to an embodiment of the present invention. As shown in FIG. 4, the Device to Device communication method based on network sharing in the example includes the following steps.

In step 401, in a D2D authentication process, the D2D UE acquires PLMN ID of its service operator, and also acquires PLMN IDs of D2D operators capable of performing D2D discovery with the operator.

In step 402, the eNB broadcasts discovery resource pool information and communication resource pool information of the sharing operators through an SIB message.

In step 403, the D2D UE receives the broadcast message sent by the eNB, searches for a resource range of D2D discovery resource pool corresponding to the PLMN ID from the broadcast message according to the PLMN ID of its own service operator at first, and then searches for resource ranges of D2D discovery resource pools corresponding to these PLMN IDs from the broadcast message according to the PLMN IDs of the operators capable of performing D2D discovery with its service operator. The D2D UE monitors discovery signals within these resource ranges.

In step 404, announcing D2D UE in the D2D UEs transmits a resource allocation request message to the eNB before transmitting a D2D discovery message. The message carries the PLMN ID of the service operator of the D2D UE.

In step 405, after receiving the message, the eNB allocates a radio resource to the D2D UE in the resource pool corresponding to the service operator according to the PLMN ID of the service operator.

In step 406, the eNB transmits a resource allocation response message to the announcing D2D UE in the D2D UEs.

In step 407, the announcing D2D UE in the D2D UEs transmits a D2D discovery message on the resource allocated by the eNB after receiving the message. Monitoring UE in the D2D UEs monitors the message to implement a D2D discovery flow.

In the embodiment of the present invention, it is easy to implement D2D discovery and D2D communication according to the D2D resource, and a detailed flow of the D2D discovery and D2D communication will not be elaborated since it is not a key of the embodiment of the present invention.

### Embodiment 3

The embodiment provides a specific embodiment of implementing network sharing to implement D2D discovery under a D2D technology. In the embodiment, D2D UE by itself allocates a radio resource used when D2D discovery signaling is sent.

An eNB allocates respective discovery resource pools and respective communication resource pools to D2D operators participating in network sharing.

The eNB divides a D2D communication resource pool for each D2D operator in a total resource pool for D2D communication according to PLMN IDs of the D2D operators participating in network sharing.

The eNB divides a D2D discovery resource pool for each D2D operator in a total resource pool for D2D discovery according to the PLMN IDs of the D2D operators participating in network sharing.

The eNB announces the D2D UEs served by different operators of information about D2D discovery resource pools used the D2D UEs and information about D2D communication resource pools used the D2D UEs through a broadcast message.

The eNB adds a new SIB message, and a format of the SIB message is shown in Table 1. The SIB message includes the PLMN IDs of the D2D operators in network sharing. Two D2D parameter tables are included for each PLMN ID. Herein, one is a D2D communication resource pool parameter table, and one is a D2D discovery resource pool parameter table. Each parameter table defines a resource range of the resource pool from three aspects of time, frequency and code.

The D2D UEs served by different operators perform D2D discovery to implement network sharing under the D2D technology by virtue of information of the abovementioned resource pools.

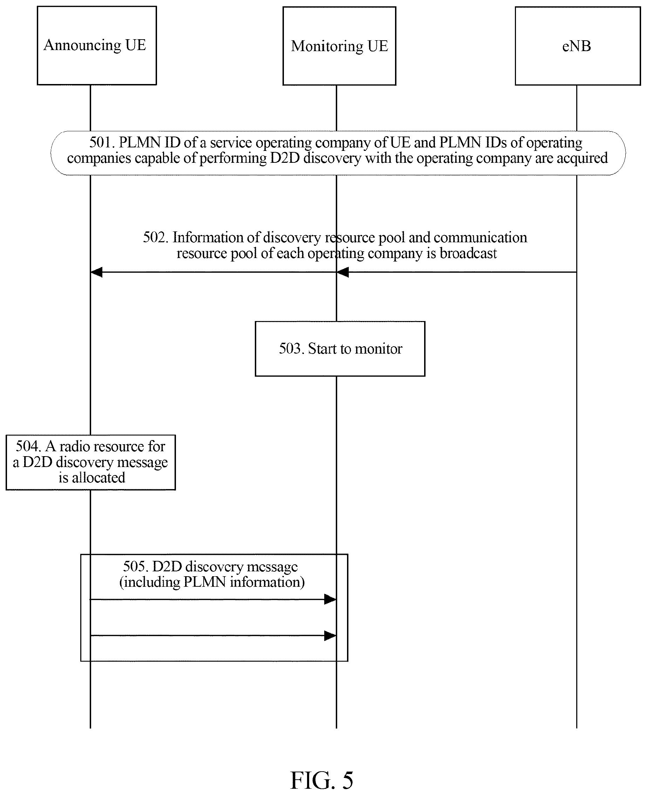

FIG. 5 is a flowchart of example 3 of a Device to Device communication method based on network sharing according to an embodiment of the present invention. As shown in FIG. 5, the Device to Device communication method based on network sharing in the example includes the following steps.

In step 501, in a D2D authentication process, the D2D UE acquires PLMN ID of its service operator, and also acquires PLMN IDs of D2D operators capable of performing a D2D discovery with the operator.

In step 502, the eNB broadcasts discovery resource pool information and communication resource pool information of the sharing operators through an SIB message.

In step 503, the D2D UE receives the broadcast message sent by the eNB, searches for a resource range of the D2D discovery resource pool corresponding to the PLMN ID from the broadcast message according to the PLMN ID of its own service operator at first, and then searches for resource ranges of D2D discovery resource pools corresponding to these PLMN IDs from the broadcast message according to the PLMN IDs of the operators capable of performing the D2D discovery with its service operator. The D2D UE monitors discovery signals within these resource ranges.

In step 504, announcing UE in the D2D UEs allocates a radio resource for a D2D discovery message in the radio resource pool of its service operator.

In step 505, the announcing UE in the D2D UEs transmits the D2D discovery message, and monitoring UE in the D2D UEs monitors the message to implement a D2D discovery flow.

In the embodiment of the present invention, it is easy to implement D2D discovery and D2D communication according to the D2D resource, and a detailed flow of the D2D discovery and D2D communication will not be elaborated since it is not a focus of the embodiment of the present invention.

### Embodiment 4

The embodiment provides a specific embodiment of implementing network sharing to implement D2D communication under a D2D technology. In a D2D communication process, only D2D UE itself can allocate radio resources used when D2D communication data and D2D communication signaling are sent.

An eNB allocates respective discovery resource pools and respective communication resource pools to D2D operators participating in network sharing.

The eNB divides a D2D communication resource pool for each D2D operator in a total resource pool for D2D communication according to PLMN IDs of the D2D operators participating in network sharing.

The eNB divides a D2D discovery resource pool for each D2D operator in a total resource pool for D2D discovery according to the PLMN IDs of the D2D operators participating in network sharing.

The eNB announces the D2D UEs served by different operators of information about D2D discovery resource pools used by the D2D UEs and information about D2D communication resource pools used by the D2D UEs through a broadcast message.

The eNB adds a new SIB message, and a format of the SIB message is shown in Table 1. The SIB message includes the PLMN IDs of the D2D operators in network sharing. Two D2D parameter tables are included for each PLMN ID. Herein, one is a D2D communication resource pool parameter table, and one is a D2D discovery resource pool parameter table. Each parameter table defines a resource range of the resource pool from three aspects of time, frequency and code.

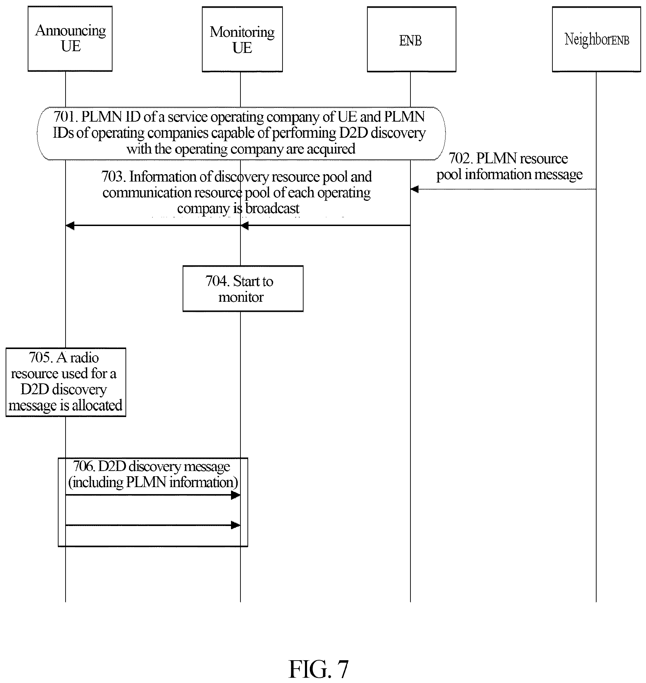

The D2D UEs served by different operators performs D2D communication to implement network sharing under the D2D technology by virtue of information of the abovementioned resource pools. A flow is shown in FIG. 7.

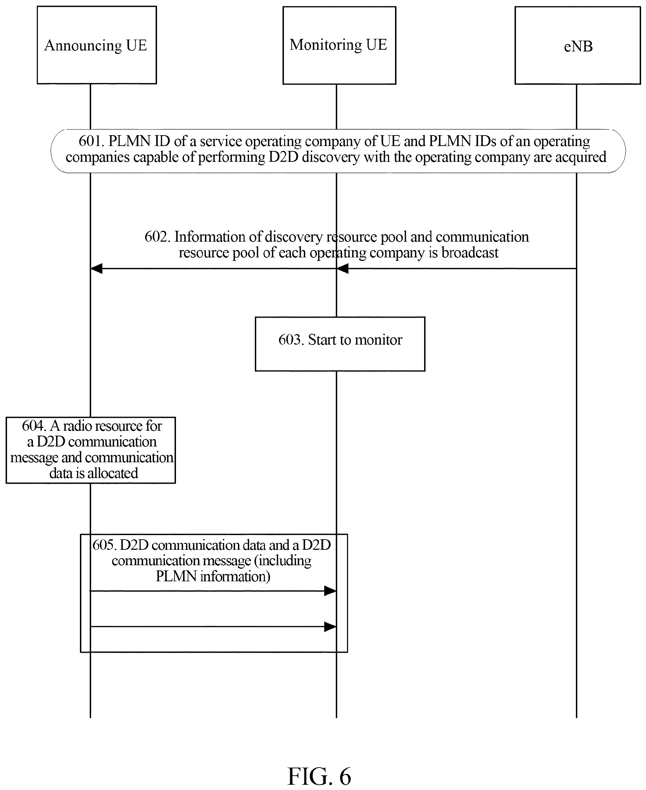

FIG. 6 is a flowchart of example 4 of a Device to Device communication method based on network sharing according to an embodiment of the present invention. As shown in FIG. 6, the Device to Device communication method based on network sharing in the example includes the following steps.

In step 601, in a D2D authentication process, the D2D UE acquires a PLMN ID of its service operator, and also acquires PLMN IDs of D2D operators capable of performing D2D communication with the operator.

In step 602, the eNB broadcasts discovery resource pool information and communication resource pool information of the sharing operators through an SIB message.

In step 603, the D2D UE receives the broadcast message sent by the eNB, searches for a resource range of a D2D discovery resource pool corresponding to the PLMN ID from the broadcast message according to the PLMN ID of itself own service operator at first, and then searches for resource ranges of D2D communication resource pools corresponding to these PLMN IDs from the broadcast message according to the PLMN IDs of the operators capable of performing D2D communication with its service operator. The D2D UE receives D2D communication data and D2D communication signaling within these resource ranges.

In step 604, before transmitting D2D communication data and/or a communication message, the D2D UE allocates a radio resource used when transmitting the communication data and/or the communication message in the radio resource pool corresponding to its own service operator.

In step 605, the D2D UE transmits the D2D communication data and/or communication message on the radio resource after completing allocation. Other D2D UEs monitor the D2D communication data and/or communication signaling. If the D2D communication data and/or communication signaling are communication data and communication signaling sent to its own, the D2D UE receives to implement a D2D communication flow.

In the embodiment of the present invention, it is easy to implement D2D discovery and D2D communication according to the D2D resource, and a detailed flow of the D2D discovery and D2D communication will not be elaborated because it is not a focus of the embodiment of the present invention.

### Embodiment 5

The example provides a specific embodiment of implementing network sharing to implement D2D discovery under a D2D technology. The embodiment corresponds to a scenario where an eNB broadcasts resource pool information of a neighbor cell.

The eNB obtains resource pool information of a neighbor eNB.

The neighbor eNB transmits a PLMN resource pool information message. The message includes frequency point information of the neighbor eNB, PLMN IDs of D2D operators, participating in network sharing, of the neighbor eNB, and resource pool information corresponding to each operator.

The eNB announces D2D UEs served by different operators of information about D2D discovery resource pools used by the D2D UEs through a broadcast message. Information about D2D discovery resource pool of the neighbor cell is also included.

The eNB adds a new SIB message, and a format of the SIB message is shown in Table 2.

**Table 2**

| *SystemInformationBlockTypeX* field descriptions |
|---|
| D2D-PerPLMN-List |
| D2D parameter list for each PLMN |
| D2D-PerPLMN |
| D2D-plmn-Identity |
| Identity of D2D plmn |
| parametersD2Dfindresourcepool |
| Information of D2D discovery resource pool |
| >Frequenceclass |
| Frequency domain information of D2D discovery resource pool |
| >timeslotclass |
| Time information of D2D discovery resource pool |
| >codeclass |
| Code information of D2D discovery resource pool |
| parametersD2Dcommresourcepool |
| Information of D2D communication resource pool |
| >Frequenceclass |
| Frequency domain information of D2D communication resource pool |
| >timeslotclass |
| Time information of D2D communication resource pool |
| >codeclass |
| Code information of D2D communication resource pool |
| NeighorCell Id |
| Identity of neighbor cell |
| >NeighborCellFreq |
| Frequency point of neighbor cell |
| >>NeighborD2D-plmn-Identity |
| Identity of D2D plmn of neighbor cell |
| >NeighborparametersD2Dfindresourcepool |
| Information of D2D discovery resource pool of neighbor cell |
| >>NeighborFrequenceclass |
| Frequency domain information of D2D discovery resource pool of neighbor cell |
| >>Neighbortimeslotclass |
| Time information of D2D discovery resource pool of neighbor cell |
| >>Neighborcodeclass |
| Code information of D2D discovery resource pool of neighbor cell |

The SIB message also includes resource pool information of D2D operators, in network sharing, of the neighbor cell, besides the resource pool information of the D2D operators, in network sharing, of a local cell. The SIB message includes frequency point information of the neighbor cell, and also includes PLMN IDs of the D2D operators in network sharing. A D2D parameter table is included for each PLMN ID, that is, a D2D discovery resource pool parameter table. The parameter table defines a resource range of a resource pool from three aspects of time, frequency and code.

D2D UEs served by different operators performs D2D discovery to implement network sharing under the D2D technology by virtue of information of the abovementioned resource pools.

FIG. 7 is a flowchart of example 5 of a Device to Device communication method based on network sharing according to an embodiment of the present invention. As shown in FIG. 7, the Device to Device communication method based on network sharing in the example includes the following steps.

In step 701, in a D2D authentication process, the D2D acquires a PLMN ID of its service operator, and also acquires PLMN IDs of D2D operators capable of performing D2D communication with the operator.

In step 702, the neighbor cell announces the eNB of resource pool information of operators, participating in network sharing, of the neighbor cell through a PLMN resource pool information message.

In step 703, the eNB broadcasts discovery resource pool information and communication resource pool information of sharing operators through an SIB message, also including the resource pool information of the operators, participating in network sharing, of the neighbor cell.

In step 704, the D2D UE receives the broadcast message sent by the eNB, searches for a resource range of a D2D discovery resource pool corresponding to the PLMN ID from the broadcast message according to the PLMN ID of its own service operator at first, and then searches for resource ranges of D2D discovery resource pools corresponding to these PLMN IDs from the broadcast message, including D2D PLMN ID information, participating in network sharing, of the neighbor cell, according to the PLMN IDs of the operators capable of performing D2D discovery with its service operator. The D2D UE monitors a discovery signal within these resource ranges.

In step 705, before transmitting D2D communication data and/or communication message, the D2D UE allocates a radio resource used when the discovery signal is sent in the radio resource pool corresponding to its own service operator.

In step 706, the D2D UE transmits a D2D discovery message on the radio resource after completing allocation, and other D2D UEs monitor the D2D discovery message to implement a D2D discovery flow. If a frequency point of the neighbor cell is different from the present cell, during monitoring, the D2D UE is required to perform frequency point switching at a specific time interval to discover D2D UE at a different frequency point.

In the embodiment of the present invention, it is easy to implement D2D discovery and D2D communication according to the D2D resource, and a detailed flow elaborated will not be elaborated since it is not a focus of the embodiment of the present invention.

### Embodiment 6

The example provides a specific embodiment of implementing network sharing to implement D2D discovery under a D2D technology. The embodiment corresponds to a scenario where a D2D sharing PLMN supported by an eNB is different from a serving PLMN of the eNB or a PLMN supporting sharing of the eNB. In the embodiment, the eNB allocates a radio resource used when D2D discovery signaling is sent.

The eNB allocates respective discovery resource pools and respective communication resource pools to D2D operators participating in network sharing.

The eNB divides a D2D communication resource pool for each D2D operator in a total resource pool for D2D communication according to PLMN IDs of the D2D operators participating in network sharing.

The eNB divides a D2D discovery resource pool for each D2D operator in a total resource pool for D2D discovery according to the PLMN IDs of the D2D operators participating in network sharing.

The eNB announces D2D UEs served by different operators of information about D2D discovery resource pools used by the D2D UEs and information about D2D communication resource pools used by the D2D UEs through a broadcast message.

The eNB adds a new SIB message, and a format of the SIB message is shown in Table 1. The SIB message includes the PLMN IDs of the D2D operators in network sharing. Two D2D parameter tables are included for each PLMN I. Herein, one is a D2D communication resource pool parameter table, and one is a D2D discovery resource pool parameter table. Each parameter table defines a resource range of the resource pool from three aspects of time, frequency and code.

The D2D UEs served by different operators perform D2D discovery to implement network sharing under the D2D technology by virtue of information of the abovementioned resource pools.

FIG. 8 is a flowchart of example 6 of a Device to Device communication method based on network sharing according to an embodiment of the present invention. As shown in FIG. 8, the Device to Device communication method based on network sharing in the example includes the following steps.

In step 801, during PLMN selection, the D2D UE discovers that the eNB supports its D2D PLMN, and a normal D2D flow is implemented.

In step 802, in a D2D authentication process, the D2D UE acquires PLMN ID of its service operator, and also acquires PLMN IDs of D2D operators capable of performing D2D discovery with the operator. The eNB normally processes the D2D flow, but does not allow the UE to access a basic network.

In step 803, in the authentication process or a switching process, the eNB generates a corresponding relationship between the D2D UE and the PLMN ID of its service operator.

In step 804, the eNB broadcasts discovery resource pool information and communication resource pool information of the sharing operators through an SIB message.

In step 805, the D2D UE receives the broadcast message sent by the eNB, searches for a resource range of D2D discovery resource pool corresponding to the PLMN ID from the broadcast message according to the PLMN ID of its own service operator at first, and then searches for resource ranges of D2D discovery resource pools corresponding to these PLMN IDs from the broadcast message according to the PLMN IDs of the operators capable of performing D2D discovery with the service operator. The D2D UE monitors discovery signals within these resource ranges.

In step 806, announcing D2D UE in the D2D UEs transmits a resource allocation request message to the eNB before transmitting a D2D discovery message.

In step 807, after receiving the message, the eNB determines its service operator of the D2D UE according to information of the D2D UE, and the eNB allocates a radio resource to the D2D UE in the resource pool corresponding to the service operator of the D2D UE.

In step 808, the eNB transmits a resource allocation response message to the announcing D2D UE in the D2D UEs.

In step 809, the announcing D2D UE in the D2D UEs transmits a D2D discovery message on the resource allocated by the eNB after receiving the message, and the D2D UE monitors the message to implement a D2D discovery flow.

In the embodiment of the present invention, it is easy to implement D2D discovery and D2D communication according to the D2D resource, and a detailed flow elaborated will not be elaborated since it is not a focus of the embodiment of the present invention.

The embodiment of the present invention further records a Device to Device communication system based on network sharing. The system includes Device to Device User Equipment D2D UE and a network. It needs to be noted that the Device to Device communication system based on network sharing in the embodiment of the present invention is completely the same as an existing wireless communication network. The architecture of the wireless communication network is not changed in the embodiment of the present invention, but functions of a part of network elements therein are correspondingly updated. In the embodiment of the present invention, the network particularly refers to an eNB, and of course, may also be another network element for resource allocation, such as an eNB controller and a mobility management unit and so on. In the Device to Device communication system based on network sharing in the embodiment of the present invention,
the network is arranged to transmit at least one of the following information through a broadcast message or a dedicated message:
a list of different PLMNs supporting D2D,
resource pool information for D2D discovery and/or D2D communication of different PLMNs, and
a PLMN list corresponding to resource pool information for D2D discovery and/or D2D communication;
and the D2D UE is arranged to receive the resource pool information or the resource pool information corresponding to the PLMN list sent by the network, and determine a resource pool/pools for D2D discovery and/or D2D communication by virtue of the resource pool information or the resource pool information corresponding to the PLMN list.

The D2D UE is further arranged to determine an available resource range for D2D discovery and/or D2D communication required to be monitored and/or received by the D2D UE in a D2D discovery and/or D2D communication process according to broadcast messages and/or dedicated messages of a serving PLMN and an equivalent PLMN.

The network is further arranged to allocate corresponding D2D resource pools to the serving PLMN and the equivalent PLMN allowed to be accessed by the D2D UE respectively when allocating a radio resource used for D2D discovery and/or D2D communication to the D2D UE according to a request of the D2D UE.

The D2D UE is further arranged to acquire a radio resource from a D2D discovery resource pool corresponding to a PLMN currently serving the D2D UE or an equivalent PLMN when transmitting D2D discovery signaling and/or communication signaling and/or communication data.

In the embodiment of the present invention, the broadcast message and/or the dedicated message include/includes at least one of the following information:
a PLMN ID list of D2D operators which perform network sharing;
more than one PLMN ID, herein each PLMN ID corresponds to different resource pools;
and the broadcast message and/or the dedicated message include/includes a list of PLMN IDs using the same resource pool,
herein, the broadcast message and/or the dedicated message include/includes time, frequency and code information of a D2D resource pool.

The network is further arranged to allocate different D2D discovery and/or D2D communication resource pools to different PLMNs; or
allocate the same D2D discovery and/or D2D communication resource pools to different PLMNs.

In the embodiment of the present invention, the resource pools include a D2D discovery resource pool and a D2D communication resource pool.

Herein, the D2D discovery resource pool includes a transmission resource pool and a reception resource pool.

The D2D communication resource pool includes a scheduling assignment resource pool, a transmission resource pool and a reception resource pool.

The resource pool information for D2D discovery and/or D2D communication of different PLMNs includes information of a neighbor cell.

Herein, the information of the neighbor cell includes: cell Identity information and/or Physical Cell Identity PCI information, and/or cell carrier frequency information, resource pool information for D2D discovery and/or D2D communication, and information about more than one corresponding PLMN.

The network is further arranged to obtain the resource pool information of the neighbor cell through a ground interface message of X2 and/or S1; or
obtain the resource pool information of the neighbor cell through Operation Administration and Maintenance OAM.

The network bears a list of D2D PLMNs supported by the network in SIB1.

Correspondingly, the D2D UE selects a network only supporting a PLMN of the D2D UE when selecting a cell.

The embodiment of the present invention further records a storage medium, and a computer program is stored in the storage medium, and the computer program is arranged to execute the abovementioned Device to Device communication method based on network sharing in each of the abovementioned embodiments.

The technical solutions recorded in the embodiments of the present invention may be freely combined under the condition of no conflicts.

In some embodiments provided by the present invention, it should be understood that the disclosed method and intelligent equipment may be implemented in another manner. The equipment embodiments described above are only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between various displayed or discussed components may be indirect coupling or communication connection through some interfaces, the equipment or the units, and may be electrical and mechanical or adopt other forms.

The abovementioned units described as separate parts may or may not be physically separated, and parts displayed as units may or may not be physical units, and namely may be located in the same place, or may also be distributed to multiple network units. Part or all of the units therein may be selected to achieve the purpose of the solutions of the embodiment according to practical requirements.

In addition, each function unit in various embodiments of the present invention may be integrated into a processing unit, and each unit may also be used as a unit independently, and two or more than two units may also be integrated into a unit. The abovementioned integrated units may be implemented in a hardware form, and may also be implemented in form of hardware and software function unit.

The above is only the specific implementation modes of the present invention and not intended to limit the scope of protection of the present invention. Any variations or replacements apparent to those skilled in the art within the technical scope disclosed by the present invention shall fall within the scope of protection of the present invention.

### Industrial Applicability

In the present invention, D2D network operators may cooperate to construct/operate a D2D-technology-based LTE network by network sharing by virtue of respective advantages, so that network construction investments are reduced, and a network deployment speed is greatly increased, and core competitiveness of the operators is improved.

## Claims

1. A Device to Device communication method based on network sharing, the method comprising:
receiving, by a Device to Device User Equipment, D2D UE, at least one of the following information sent by a network through a broadcast message or a dedicated message:
a list of different Public Land Mobile Networks, PLMNs, supporting D2D,
resource pool information for D2D discovery and/or D2D communication of different PLMNs, and
a list of PLMNs corresponding to the resource pool information for D2D discovery and/or D2D communication;
determining resource used for D2D discovery and/or D2D communication by virtue of the resource pool information or resource pool information corresponding to the list of PLMNs.

2. The method according to claim 1, wherein, determining, by the UE, a resource pool used for D2D discovery and/or D2D communication comprises:
determining, by the D2D UE performing D2D discovery and/or D2D communication, available resource for D2D discovery and/or D2D communication required to be monitored and/or received by the D2D UE according to serving PLMN and equivalent PLMNs obtained by broadcast messages and/or dedicated messages.

3. The method according to claim 1, wherein, the method further comprises:
allocating, by the network, corresponding D2D resource pools to the serving PLMN and the equivalent PLMNs respectively.

4. The method according to claim 1, wherein, the method further comprises:
acquiring, by the D2D UE, radio resource from D2D discovery resource pool corresponding to serving PLMN of the D2D UE when transmitting D2D discovery signaling and/or communication signaling and/or communication data.

5. The method according to any one of claims 1-4, wherein, the broadcast message and/or the dedicated message comprise/comprises at least one of the following information:
a list of PLMN Identities, IDs of D2D operators which support network sharing;
more than one PLMN ID, wherein each PLMN ID corresponds to different resource pools;
the broadcast message and/or the dedicated message comprise/comprises a list of PLMN IDs using a same resource pool.

6. The method according to any one of claims 1-4, wherein, the broadcast message and/or the dedicated message comprise/comprises time, frequency and code information of a D2D resource pool.

7. The method according to any one of claims 1-4, wherein, the resource pool comprises a D2D discovery resource pool/pools and a D2D communication resource pool/pools, wherein, the D2D discovery resource pool/pools comprises/comprise a transmission resource pool/pools and a reception resource pool/pools; and
the D2D communication resource pool/pools comprises/comprise a scheduling assignment resource pool/pools, a transmission resource pool/pools and a reception resource pool/pools.

8. The method according to any one of claims 1-4, wherein, the resource pool information for D2D discovery and/or D2D communication of different PLMNs comprises neighbor cell/cells D2D discovery resource pool/pools and D2D communication resource pool/pools information.

9. The method according to claim 8, wherein, the information of the neighbor cell may comprise any combination of the following fields: cell Identity information and/or Physical Cell Identity PCI information, cell carrier frequency information, resource pool information for D2D discovery and/or D2D communication, and PLMN or PLMN list information corresponding to resource pools for D2D discovery and/or D2D communication.

10. The method according to claim 8, wherein, the method further comprises:
obtaining, by the network, resource pool information of the neighbor cell through X2 and/or S1 interface; or
obtaining, by the network, the resource pool information of the neighbor cell through Operation Administration and Maintenance, OAM.

11. The method according to any one of claims 1-4, wherein, the method further comprises:
transmitting, by the network in System Information Block 1, SIB1, a list of D2D PLMNs supported by the network.

12. A Device to Device communication system based on network sharing, comprising a D2D UE and a network, wherein
the network is arranged to transmit at least one of the following information through a broadcast message or a dedicated message:
a list of different Public Land Mobile Networks PLMNs supporting D2D,
resource pool information for D2D discovery and/or D2D communication of different PLMNs, and
a list of PLMNs corresponding to the resource pool information for D2D discovery and/or D2D communication; and
the D2D UE is arranged to receive the resource pool information or resource pool information corresponding to the list of PLMNs sent by the network, and determine resource used for D2D discovery and/or D2D communication by virtue of the resource pool information or the resource pool information corresponding to the list of PLMNs.

13. The system according to claim 12, wherein
the D2D UE is further arranged to determine available resource for D2D discovery and/or D2D communication required to be monitored and/or received by the D2D UE performing D2D discovery and/or D2D communication according to serving PLMN and equivalent PLMNs obtained by broadcast messages and/or dedicated messages.

14. The system according to claim 12, wherein
the network is also arranged to allocate corresponding D2D resource pools to the serving PLMN and the equivalent PLMNs respectively.

15. The system according to claim 12, wherein
the D2D UE is also arranged to acquire radio resource from D2D discovery resource pool corresponding to serving PLMN of the D2D UE when transmitting D2D discovery signaling and/or communication signaling and/or communication data.

16. The system according to any one of claims 12-15, wherein, the broadcast message and/or the dedicated message comprise/comprises at least one of the following information:
a list of PLMNIDs of D2D operators which support network sharing;
more than one PLMN ID, wherein each PLMN ID corresponds to different resource pools;
the broadcast message and/or the dedicated message comprise/comprises a list of PLMN IDs using a same resource pool,
wherein, the broadcast message and/or the dedicated message comprise/comprises time, frequency and code information of a D2D resource pool.

17. The system according to any one of claims 12-15, wherein, the resource pool comprises a D2D discovery resource pool/pools and a D2D communication resource pool/pools,
wherein, the D2D discovery resource pool/pools comprises/comprise a transmission resource pool/pools and a reception resource pool/pools; and
the D2D communication resource pool/pools comprises a scheduling assignment resource pool/pools, a transmission resource pool/pools and a reception resource pool/pools,
wherein, the resource pool information for D2D discovery and/or D2D communication of different PLMNs comprises neighbor cell/cells D2D discovery resource pool/pools and D2D communication resource pool/pools information.

18. The system according to any one of claims 12-15, wherein
the network is also arranged to obtain resource pool information of the neighbor cell through X2 and/or S1 interface; or
obtain the resource pool information of the neighbor cell through Operation Administration and Maintenance, OAM.

19. A storage medium where a computer program is stored, wherein the computer program is arranged to execute the Device to Device communication method based on network sharing according to any one of claims 1-11.
